# FASCICULE DE BREVET EUROPEEN

(11) **EP 1 901 917 B1**
(45) Date de publication et mention de la délivrance du brevet: **03.02.2016**
(21) Numéro de dépôt: 06778970.1
(22) Date de dépôt: 23.06.2006
(51) Int. Cl.: B32B 17/10, F41H 5/04

(54) **STRUCTURE FEUILLETEE A RESISTANCE BALISTIQUE**
BALLISTISCH WIDERSTANDSFÄHIGE BESCHICHTETE STRUKTUR
BALLISTIC RESISTANT LAMINATED STRUCTURE

(30) Priorité: 24.06.2005 FR 0551755
(43) Date de publication de la demande: 26.03.2008
(73) Titulaire: SAINT-GOBAIN GLASS FRANCE, 92400 Courbevoie (FR)
(72) Inventeur: MANDELARTZ, Matthias, 52134 Herzogenrath (DE); LERAY, Stéphane, F-45500 Saint Gondon (FR); CHAUSSADE, Pierre, F-45100 Orleans (FR)
(74) Mandataire: Cardin, Elise
(86) Numéro de dépôt international: PCT/FR2006/050625
(87) Numéro de publication internationale: WO 2006/136761

(56) Documents cités:
- EP-A- 0 693 366
- WO-A-01/00403

## Description

La présente invention a trait aux structures feuilletées à haute résistance balistique, notamment transparentes telles qu'utilisées comme vitrages blindés.

Par résistance balistique au sens de l'invention, on entend une résistance aux niveaux BR 3 (calibre 357 Magnum), BR 4 (calibre 44 Magnum), BR 5 (calibre 5,56 x 45), et jusqu'à BR 6 (calibre 7,62 x 51) de la norme FR EN 1063, ainsi en particulier qu'aux tirs de kalachnikov (calibre 7,62 x 39).

Les vitrages blindés dont il est question sont particulièrement adaptés à une utilisation comme vitrage de bâtiment ou, en particulier, de véhicule de transport blindé.

Les structures feuilletées à haute résistance balistique de l'invention comportent un insert métallique périphérique de blindage introduit dans une cavité de la structure feuilletée, dans le prolongement et avec un espacement de 0,2 à 1,3 mm de l'une de ses feuilles de verre constitutives.

Le document WO 01 100 403 A1 décrit le blocage de cet insert par la ou les feuilles de verre ou par une cale en matériau composite, situées à l'arrière de l'insert par rapport à l'impact susceptible de se produire.

Le document EP 693 366 A1 décrit le collage d'une bande périphérique sur le chant d'un vitrage blindé.

D'autre part, de nombreux vitrages de véhicules de transport forment à leur périphérie un certain angle par rapport à l'horizontale, par exemple de l'ordre de 45°.Par conséquent, un tir horizontal en direction de cette périphérie présentera un angle d'incidence également de l'ordre de 45°.

Les inventeurs se sont aperçu que, dans ces conditions, un tir à l'intérieur de la zone délimitée par l'insert, et à faible distance de celui-ci, notamment entre 15 et 25 mm du bord intérieur de l'insert, était susceptible d'entraîner des dommages à l'intérieur du véhicule. En effet, c'est une zone d'environ 200 mm de verre qui absorbe l'impact ; le polycarbonate constituant habituellement la face à l'intérieur du véhicule, se déforme, de telle sorte que des éclats de verre sont susceptibles d'être projetés à l'intérieur du véhicule.

L'invention a donc pour but de protéger l'utilisateur d'un ou plusieurs tirs à proximité du bord intérieur de l'insert périphérique de blindage, notamment sous incidence de l'ordre de 45°.

A cet effet, l'invention a pour objet une structure feuilletée comprenant successivement au moins une première feuille de verre, une seconde feuille de verre reliée à la première par une couche adhésive, le bord de la seconde feuille de verre étant en retrait par rapport à celui de la première sur un côté au moins, une troisième feuille de verre reliée à la seconde par une couche adhésive, le bord de la seconde feuille de verre étant, sur ledit côté au moins, en retrait par rapport à celui de la troisième, lui-même en retrait par rapport à celui de la première, éventuellement une ou plusieurs feuilles de verre supplémentaires reliées à la troisième et, le cas échéant, les unes aux autres par une ou des couches adhésives, une feuille pour amortir un impact de projectile, reliée à la troisième ou dernière feuille de verre par une couche adhésive, un insert de blindage en matériau à haute résistance balistique occupant sur ledit côté au moins, une partie au moins de la cavité délimitée par les bords des première et troisième feuilles de verre et le chant de la seconde. Cette structure feuilletée se distingue, conformément à l'invention, par le fait que sur ledit côté au moins, les bords de la troisième feuille de verre, ainsi que de ladite ou des dites feuilles de verre supplémentaires, sont en retrait par rapport à celui de la feuille pour amortir un impact de projectile, et que l'espace compris entre l'insert de blindage, le chant de la troisième feuille de verre et le bord de la feuille pour amortir un impact de projectile est occupé au moins en partie par un matériau apte à absorber l'énergie d'un projectile et que ce matériau est collé à l'insert de blindage, au chant de la troisième feuille de verre et à la feuille pour amortir un impact de projectile, par l'intermédiaire d'un matériau apte à fluer et assurer le dégazage pendant l'assemblage de la structure feuilletée et qu'un matériau d'encapsulation étanche au matériau fluant pendant l'assemblage et imperméable vis-à-vis de la pénétration d'humidité dans la structure feuilletée, encapsule au moins la partie du chant de celle-ci comprise entre le chant de la feuille pour amortir un impact de projectile et une partie au moins de l'insert de blindage.

La structure feuilletée de l'invention procure durablement une protection balistique y compris dans les conditions extrêmes exposées précédemment. Ceci est dû à la fois
- à l'emploi du matériau apte à absorber l'énergie d'un projectile,
- à la qualité du collage obtenue grâce à l'aptitude de la colle à fluer et assurer le dégazage dans l'autoclave, pendant l'assemblage du feuilleté, et
- à l'encapsulation du chant d'une partie de la structure feuilletée comprenant notamment l'interface entre la feuille pour amortir un impact de projectile et la couche adhésive à laquelle elle est reliée, empêchant durablement une pénétration d'humidité, et donc une délamination à ce niveau.

L'assemblage des feuilles entrant dans la constitution d'un vitrage fabriqué en série réduite comprend, de façon usuelle, les étapes suivantes : on place tout d'abord lesdites feuilles dans une poche, fermée hermétiquement, mise sous vide. On place ensuite cette poche dans un autoclave au sein duquel la pression est comprise, en particulier, entre 8 et 14 bars, la température étant comprise entre 100 et 140 °C. Au cours de la cuisson dans l'autoclave, la matière plastique souple a tendance à fluer sous l'action de la température, ce qui peut provoquer des débordements sur le chant du vitrage.

Le matériau apte à fluer et assurer le dégazage pendant l'assemblage de la structure feuilletée et le matériau d'encapsulation sont avantageusement appliqués sur les feuilles avant la cuisson dans l'autoclave de la structure feuilletée. Il est nécessaire, lorsque ces matériaux entourent toute la périphérie de la structure, d'aménager des passages pour que les gaz dégagés lors de l'assemblage s'échappent. Selon une variante avantageuse, le matériau apte à fluer et assurer le dégazage est perméable à l'air et à la vapeur d'eau permettant ainsi à ces gaz de s'échapper sans nuire à la qualité de l'assemblage. Eventuellement, des moyens accessoires peuvent être utilisés pour faciliter ce dégazage. Ce matériau est, par ailleurs, compatible avec le matériau d'encapsulation et le matériau constituant la feuille pour amortir un impact de projectile.

Une balle tirée à faible distance du bord inférieur de l'insert de blindage, vers l'intérieur de la structure feuilletée - c'est-à-dire dans le clair de vue -, avec une incidence d'environ 45° et une direction ascendante rencontrera non plus la troisième feuille de verre, mais le matériau apte à absorber l'énergie d'un projectile. Ce matériau est fermement et durablement maintenu par le matériau d'encapsulation et la feuille pour amortir un impact de projectile. Ce dispositif est de nature à stopper la balle. Aucun éclat de verre n'est plus susceptible de pénétrer du côté de l'utilisateur, soit à travers la feuille pour amortir un impact de projectile, soit avec délamination du bord de celle-ci.

Dans une configuration avantageuse, le matériau d'encapsulation est en retrait par rapport au bord de la première feuille de verre, de telle manière que ce dernier forme, avec le bord de la couche adhésive reliant les première et seconde feuilles de verre et le bord de l'insert de blindage, une saillie d'épaisseur en permettant l'insertion dans un châssis ou une feuillure en position de montage.

Le matériau apte à fluer et assurer le dégazage pendant l'assemblage de la structure feuilletée est notamment choisi parmi un polymère ou copolymère thermoplastique de température de ramollissement comprise entre 80 et 140 °C, tel que polyuréthane thermoplastique associé ou non à du polyvinylbutyral, copolymère éthylène/acétate de vinyle ou composite de l'un ou plusieurs d'entre eux et de fibre ou tissu de verre, aramide, polycarbonate, acier ou similaire.

Le matériau d'encapsulation est de préférence choisi parmi un matériau ne ramollissant pas aux températures d'assemblage du feuilleté dans l'autoclave comprises entre 100 et 140 °C, notamment un matériau de température de ramollissement comprise entre 145 et 190 °C, un élastomère thermoplastique, polychlorure de vinyle, polyuréthane thermoplastique ou thermodurcissable, poly(téréphtalate d'éthylène), néoprène, caoutchouc, résine époxy, ou composite de l'un ou plusieurs d'entre eux et de fibre ou tissu de verre, aramide, polycarbonate, acier ou similaire.

Le matériau d'encapsulation a une température de ramollissement supérieure à la température utilisée lors de la cuisson dans l'autoclave. Il constitue ainsi une butée à tout écoulement éventuel du matériau apte à fluer et assurer le dégazage. Pour des conditions usuelles d'utilisation, à savoir une température d'autoclave comprise entre 100 et 140 °C, la température de ramollissement du matériau d'encapsulation est, par exemple, comprise entre 145 et 190 °C. Par ailleurs, le matériau d'encapsulation possède des propriétés mécaniques suffisantes pour à la fois corriger et s'adapter à d'éventuels défauts d'alignement. Sa dureté est, par exemple, comprise entre 70 et 90 Shore A. De préférence, il présente un allongement à la rupture par exemple supérieur à 500 % et sa contrainte à la rupture est supérieure à 10 MPa, ces valeurs étant mesurées selon la norme NF T 46-002 sur des éprouvettes du type Haltère H₃. Par ailleurs, il présente un allongement supérieur à 200 % et un module d'Young initial compris entre 200 et 300 MPa, ces valeurs étant mesurées à une température de -40 °C selon la norme NF T-46.002. Cette caractéristique permet d'éviter l'endommagement du vitrage soumis à de basses températures.

Le matériau d'encapsulation est compatible avec tout matériau destiné à être à son contact, aussi bien le matériau apte à fluer et assurer le dégazage que, par exemple, un cordon de colle utilisé pour fixer le vitrage à une baie de carrosserie et/ou un matériau utilisé pour constituer un joint d'étanchéité et/ou de montage, par exemple un joint encapsulé ou extrudé.

Ce matériau d'encapsulation est, avantageusement, imperméable à l'eau et à la vapeur d'eau.

Dans une réalisation préférée de l'invention, l'une au moins des première, seconde ou troisième feuilles de verre, ou feuilles de verre supplémentaires, est renforcée, notamment trempée chimiquement. Cette mesure améliore en effet la protection vis-à-vis de projectiles perforants.

La trempe chimique, décrite par exemple dans le brevet FR 2 595 091, consiste à remplacer des ions de la surface d'une feuille de verre silico-sodocalcique, par exemple, par d'autres de plus grands diamètres, de manière à créer une compression.

Dans le même but, une autre réalisation consiste en ce que la surface libre de la première feuille de verre, c'est-à-dire la face destinée à recevoir le ou les impacts de balles, est revêtue par une couche de renforcement mécanique. Il s'agit notamment de Si₃N₄, de carbone amorphe tétraédrique hydrogéné ta - C : H (appelé DLC pour Diamond Like Carbon) ... L'épaisseur de ces couches est notamment comprise entre 5 et 500 nm, et n'excède pas, par ordre décroissant de préférence, 300 nm, 100 nm, 50 nm, 25 nm. Elle est typiquement de 10 nm.

Si₃N₄ est obtenu par pulvérisation cathodique assistée par champ magnétique (magnétron) au moyen d'une cible en silicium dopé avec un métal tel qu'Al pour la rendre suffisamment conductrice, et en atmosphère nitrurante.

Les couches DLC peuvent résulter de la dissociation d'un précurseur tel que CH₄, C₂H₆, C₂H₄, C₂H₂ ... dans une source ionique (basée ou non sur le principe de couche anodique - anode layer source - avec ou sans grille d'accélération des ions, excité par courant continu, alternatif ou rayonnement micro-onde), le flux d'ions ainsi créé étant dirigé sur le substrat - chauffé ou non - avec des énergies entre 100-2000 eV. Les couches DLC peuvent être par ailleurs obtenues par tout autre procédé tel que dépôt chimique en phase vapeur (CVD).

Selon d'autres caractéristiques avantageuses de la structure feuilletée de l'invention :
- l'épaisseur des première et seconde feuilles de verre, et feuilles de verre supplémentaires est comprise entre 2 et 8 mm, celle de la troisième feuille de verre entre 4 et 10 mm, celle de la feuille pour amortir un impact de projectile entre 2 et 4 mm, celle de chaque couche adhésive reliant deux feuilles de verre entre 0,3 et 1,5 mm, et celle de la couche adhésive reliant la troisième ou dernière feuille de verre et la feuille pour amortir un impact de projectile entre 1,5 et 3,5 mm ;
- la feuille pour amortir un impact de projectile est en polycarbonate ou similaire, usuellement employé pour constituer la face du côté de l'utilisateur à protéger (de manière bien connue en effet, le polycarbonate est apte à absorber une partie de l'énergie d'une balle, en se déformant éventuellement) ;
- l'insert de blindage est en acier ou similaire, d'épaisseur comprise entre 1 et 4 mm, et pénètre dans la structure feuilletée d'une profondeur comprise entre 3 et 20 mm par rapport au bord de la feuille pour amortir un impact de projectile.

Un effet favorable important est obtenu, d'autre part, en impact simple ou en multi-impact, par le fait que l'une au moins des couches adhésives intercalaires de la structure feuilletée qui séparent deux feuilles de verre ou une feuille de verre et une feuille de matière plastique telle que polycarbonate, ont un module d'Young à 25 °C au moins égal à 100 MPa, de préférence à 400 MPa, et de manière particulièrement préférée à 700 MPa. Des exemples en sont un polyvinylbutyral à faible teneur en plastifiant (notamment constitué de 100 parts de résine et 19 parts d'adipate de n-hexyle), un polyuréthane thermoplastique à haut module ...

L'invention a également pour objet un vitrage à haute résistance balistique pour le bâtiment ou un véhicule de transport terrestre, aérien ou aquatique, comprenant une structure feuilletée telle que décrite ci-dessus.

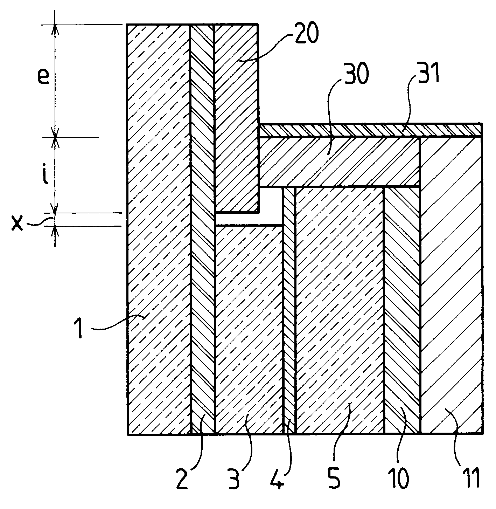

L'invention est illustrée par l'exemple qui suit, se référant à l'unique figure annexée, représentant une vue schématique en coupe de côté d'un vitrage selon l'invention.

### Exemple

Le vitrage représenté sur la figure comprend :
- une feuille de verre silico-sodocalcique trempé chimiquement (1) de 404 x 404 mm et 4 mm d'épaisseur ;
- une feuille de verre silico-sodocalcique trempé chimiquement (3) de 332 x 332 mm et 3 mm d'épaisseur ;
- une feuille de verre silico-sodocalcique trempé chimiquement (5) de 346 x 346 mm et 6 mm d'épaisseur ; et
- une feuille de polycarbonate (11) de 364 x 364 mm et 3 mm d'épaisseur.

Ces feuilles sont toutes centrées les unes par rapport aux autres, de sorte que les bords de la feuille (3) soient, sur tous les côtés, en retrait de 36 mm par rapport à ceux de la feuille (1), de 7 mm par rapport à ceux de la feuille (5), eux-mêmes en retrait de 9 mm par rapport à ceux de la feuille de polycarbonate (11).

Les feuilles (1) et (3) sont reliées par l'intermédiaire d'une couche adhésive (2) de polyuréthane thermoplastique de 0,76 mm d'épaisseur recouvrant toute la surface de la feuille (1).

Les feuilles (3) et (5) sont reliées par une couche adhésive (4) de polyvinylbutyral standard de 1,14 mm d'épaisseur recouvrant au moins la surface de la plus petite (3) des deux feuilles de verre.

Les feuilles (5) et (11) sont reliées par une couche adhésive (10) de polyuréthane thermoplastique de 2,5 mm d'épaisseur recouvrant également au moins toute la surface de la plus petite (5) des feuilles (5) et (11).

L'insert de blindage (20) forme un cadre d'acier de mêmes dimensions extérieures que celles de la feuille de verre (1), de 35 mm de largeur et de 2 mm d'épaisseur. Son bord extérieur est aligné avec celui de la feuille de verre (1), à laquelle il est destiné à être collé par l'intermédiaire de la couche adhésive (2) ; le bord intérieur de l'insert de blindage (20) est ainsi distant du bord de la seconde feuille de verre (3) de x = 1 mm.

Par rapport au bord de la feuille de polycarbonate (11), l'insert de blindage (20) émerge de la structure feuilletée de e = 20 mm et y est inséré de i = 15 mm.

Après mise en présence et en alignement souhaité de ces constituants, on place dans la cavité s'étendant entre l'insert de blindage (20) et les bords de la troisième feuille de verre (5) et de la feuille de polycarbonate (11), une quantité de polyuréthane thermoplastique (30) apte à fluer aux températures d'assemblage du feuilleté dans l'autoclave, comprises entre 100 et 140 °C. Cette quantité est suffisante pour remplir, par son fluage et le dégazage auquel elle participe pendant l'assemblage sous l'effet conjugué de la température et de la pression, la totalité de l'espace vacant, y compris celui représenté sur la figure avant l'assemblage et délimité par la couche adhésive (2), le bord intérieur de l'insert de blindage (20), le bord de la seconde feuille de verre (3) et la couche adhésive (4). La quantité de polyuréthane thermoplastique (30) est bien entendu conditionnée par le décalage du bord de la troisième feuille de verre (5) par rapport à celui de la feuille de polycarbonate (11). Ce décalage est en général compris entre 2,5 et 19,5 mm ; il est de 9 mm en l'espèce.

On recouvre cette quantité de polyuréthane thermoplastique (30) d'un matériau d'encapsulation (31) ne ramollissant pas aux températures d'assemblage du feuilleté dans l'autoclave. Il s'agit d'un ruban de polyuréthane dont le point de ramollissement est de l'ordre de 180 °C. L'épaisseur de ce ruban (31), généralement comprise entre 0,5 et 4 mm, est ici de 1 mm. Il est de préférence coloré, par exemple, en noir. Sa dureté est, par exemple, de l'ordre de 85 ± 5 Shore A. Il allie ainsi à la fois une rigidité afin de corriger les défauts d'alignement des feuilles constituant la structure et une souplesse pour s'adapter à ce défaut d'alignement, ceci en combinaison avec le polyuréthane thermoplastique (30) sous-jacent. Ce dernier (30) assure le collage du matériau d'encapsulation (31) avec l'insert de blindage (20) d'une part, avec le bord de la feuille de polycarbonate (11) d'autre part.

Le matériau d'encapsulation (31) empêche la pénétration de toute humidité dans la structure feuilletée, pénétration susceptible d'entraîner en particulier la délamination de la feuille de polycarbonate (11).

La structure feuilletée est ainsi assemblée selon le procédé classique en autoclave à 100-140 °C.

On soumet la structure feuilletée obtenue à des tirs de calibres 44 Magnum à vitesse de 440 ± 10 m/s, sous incidence de 45° de direction ascendante par rapport à la figure. La structure est appliquée sur un cadre métallique venant en appui sur les surfaces libres de l'insert de blindage (20) et du matériau d'encapsulation (31), de la même façon qu'une carrosserie de véhicule de transport blindé que l'on équiperait de la structure feuilletée.

Les points d'impact sont à faible distance, indiquée ci-dessous, du bord intérieur de l'insert de blindage (20), vers l'intérieur de la structure feuilletée, c'est-à-dire vers le clair de vue, ce qu'indique le signe + appliqué à cette distance.

Un premier vitrage résiste à 3 tirs consécutifs à + 25 mm répartis sur la périphérie.

Un second vitrage résiste à 2 tirs à + 25 mm, suivis d'un tir à + 30 mm.

Un troisième vitrage ne différant des deux précédents qu'en ce que l'insert de blindage (20) est inséré dans la structure feuilletée de i = 17 mm, résiste à trois tirs consécutifs répartis sur la périphérie à + 15, + 25 et + 30 mm.

Un quatrième et un cinquième vitrages, dans lesquels l'insert de blindage (20) est inséré dans la structure feuilletée de i = 20 mm, résistent à deux tirs à + 25 mm, suivis de deux tirs à + 30 mm.

Les mêmes tirs sont réalisés sur des vitrages ne différant des précédents qu'en ce que la troisième feuille de verre (5) se prolonge jusqu'au matériau d'encapsulation (31), ainsi que la couche adhésive (10) la reliant à la feuille de polycarbonate (11).

Pour des tirs identiques à ceux décrits ci-dessus, et notamment entre + 15 et + 25 mm, on observe
- soit pas de balle traversante mais des éclats de verre projetés du côté de l'utilisateur à protéger ;
- soit une ou plusieurs balles traversantes.

Ces essais démontrent l'efficacité recherchée de la structure de l'invention.

## Revendications

1. Structure feuilletée comprenant successivement au moins une première feuille de verre (1), une seconde feuille de verre (3) reliée à la première par une couche adhésive (2), le bord de la seconde feuille de verre (3) étant en retrait par rapport à celui de la première (1) sur un côté au moins, une troisième feuille de verre (5) reliée à la seconde (3) par une couche adhésive (4), le bord de la seconde feuille de verre (3) étant, sur ledit côté au moins, en retrait par rapport à celui de la troisième (5), lui-même en retrait par rapport à celui de la première (1), éventuellement une ou plusieurs feuilles de verre supplémentaires reliées à la troisième (5) et, le cas échéant, les unes aux autres par une ou des couches adhésives, une feuille (11) pour amortir un impact de projectile, reliée à la troisième ou dernière feuille de verre (5) par une couche adhésive (10), un insert de blindage (20) en matériau à haute résistance balistique occupant sur ledit côté au moins, une partie au moins de la cavité délimitée par les bords des première et troisième feuilles de verre (1, 5) et le chant de la seconde (3), **caractérisé en ce que**, sur ledit côté au moins, les bords de la troisième feuille de verre (5) ainsi que de ladite ou des dites feuilles de verre supplémentaires, sont en retrait par rapport à celui de la feuille (11) pour amortir un impact de projectile, et **en ce que** l'espace compris entre l'insert de blindage (20), le chant de la troisième feuille de verre (5) et le bord de la feuille (11) pour amortir un impact de projectile est occupé au moins en partie par un matériau (30, 31) apte à absorber l'énergie d'un projectile, **en ce que** le matériau (30, 31) apte à absorber l'énergie d'un projectile est collé à l'insert de blindage (20), au chant de la troisième feuille de verre (5) et à la feuille (11) pour amortir un impact de projectile, par l'intermédiaire d'un matériau (30) apte à fluer et assurer le dégazage pendant l'assemblage de la structure feuilletée, et **en ce qu'**un matériau d'encapsulation (31) étanche au matériau (30) fluant pendant l'assemblage et imperméable vis-à-vis de la pénétration d'humidité dans la structure feuilletée, encapsule au moins la partie du chant de celle-ci comprise entre le chant de la feuille (11) pour amortir un impact de projectile et une partie au moins de l'insert de blindage (20).

2. Structure feuilletée selon la revendication 1, **caractérisée en ce que** le matériau d'encapsulation (31) est en retrait par rapport au bord de la première feuille de verre (1), de telle manière que ce dernier forme, avec le bord de la couche adhésive (2) reliant les première et seconde feuilles de verre (1, 3) et le bord de l'insert de blindage (20), une saillie d'épaisseur en permettant l'insertion dans un châssis ou une feuillure en position de montage.

3. Structure feuilletée selon l'une des revendications précédentes, **caractérisée en ce que** le matériau (30) apte à fluer et assurer le dégazage pendant l'assemblage de la structure feuilletée est choisi parmi un polymère ou copolymère thermoplastique de température de ramollissement comprise entre 80 et 140 °C, tel que polyuréthane thermoplastique associé ou non à du polyvinylbutyral, copolymère éthylène/acétate de vinyle ou composite de l'un ou plusieurs d'entre eux et de fibre ou tissu de verre, aramide, polycarbonate, acier ou similaire.

4. Structure feuilletée selon l'une des revendications précédentes, **caractérisée en ce que** le matériau d'encapsulation (31) est choisi parmi un matériau ne ramollissant pas aux températures d'assemblage du feuilleté dans l'autoclave comprises entre 100 et 140 °C, notamment un matériau de température de ramollissement comprise entre 145 et 190 °C, un élastomère thermoplastique, polychlorure de vinyle, polyuréthane thermoplastique ou thermodurcissable, poly(téréphtalate d'éthylène), néoprène, caoutchouc, résine époxy, ou composite de l'un ou plusieurs d'entre eux et de fibre ou tissu de verre, aramide, polycarbonate, acier ou similaire.

5. Structure feuilletée selon l'une des revendications précédentes, caractérisée en ce l'une au moins des première, seconde ou troisième feuilles de verre (1, 3, 5), ou feuilles de verre supplémentaires, est renforcée, notamment trempée chimiquement.

6. Structure feuilletée selon l'une des revendications précédentes, **caractérisée en ce que** l'épaisseur des première et seconde feuilles de verre (1, 3), et feuilles de verre supplémentaires est comprise entre 2 et 8 mm, celle de la troisième feuille de verre (5) entre 4 et 10 mm, celle de la feuille (11) pour amortir un impact de projectile entre 2 et 4 mm, celle de chaque couche adhésive (2, 4) reliant deux feuilles de verre ((1, 3) ; (3, 5)) entre 0,3 et 1,5 mm, et celle de la couche adhésive (10) reliant la troisième ou dernière feuille de verre (5) et la feuille (11) pour amortir un impact de projectile entre 1,5 et 3,5 mm.

7. Structure feuilletée selon l'une des revendications précédentes, **caractérisée en ce que** la feuille (11) pour amortir un impact de projectile est en polycarbonate ou similaire.

8. Structure feuilletée selon l'une des revendications précédentes, **caractérisée en ce que** l'insert de blindage (20) est en acier ou similaire, d'épaisseur comprise entre 1 et 4 mm, et pénètre dans la structure feuilletée d'une profondeur comprise entre 3 et 20 mm par rapport au bord de la feuille (11) pour amortir un impact de projectile.

9. Vitrage à haute résistance balistique pour le bâtiment ou un véhicule de transport terrestre, aérien ou aquatique, comprenant une structure feuilletée selon l'une des revendications précédentes.

## Patentansprüche

1. Mehrschichtstruktur, nacheinander umfassend wenigstens eine erste Glasscheibe (1), eine zweite Glasscheibe (3), die mit der ersten durch eine Haftschicht (2) verbunden ist, wobei der Rand der zweiten Glasscheibe (3) gegenüber demjenigen der ersten (1) auf wenigstens einer Seite zurückspringt, eine dritte Glasscheibe (5), die mit der zweiten (3) durch eine Haftschicht (4) verbunden ist, wobei der Rand der zweiten Glasscheibe (3) wenigstens auf der genannten Seite gegenüber demjenigen der dritten (5) zurückspringt, welcher selbst gegenüber demjenigen der ersten (1) zurückspringt, eventuell eine oder mehrere zusätzliche Glasscheiben, die mit der dritten (5) und gegebenenfalls untereinander durch eine Haftschicht oder Haftschichten verbunden sind, eine Scheibe (11) zum Abfangen eines Projektilaufpralls, die mit der dritten oder letzten Glasscheibe (5) durch eine Haftschicht (10) verbunden ist, einen Panzerungseinsatz (20) aus einem Material mit hohem ballistischen Widerstand, der wenigstens auf der genannten Seite wenigstens einen Teil des durch die Ränder der ersten und der dritten Glasscheibe (1, 5) und die Kante der zweiten (3) begrenzten Hohlraums einnimmt, **dadurch gekennzeichnet, dass** wenigstens auf der genannten Seite die Ränder der dritten Glasscheibe (5) sowie der zusätzlichen Glasscheibe oder Glasscheiben gegenüber demjenigen der Scheibe (11) zum Abfangen eines Projektilaufpralls zurückspringen und dass der Raum zwischen dem Panzerungseinsatz (20), der Kante der dritten Glasscheibe (5) und dem Rand der Scheibe (11) zum Abfangen eines Projektilaufpralls wenigstens teilweise durch ein Material (30, 31) eingenommen ist, das geeignet ist, die Energie eines Projektils zu absorbieren, dass das Material (30, 31), das geeignet ist, die Energie eines Projektils zu absorbieren, an den Panzerungseinsatz (20), an die Kante der dritten Glasscheibe (5) und an die Scheibe (11) zum Abfangen eines Projektilaufpralls mittels eines Materials (30) geklebt ist, das geeignet ist, während des Zusammenfügens der Mehrschichtstruktur zu fließen und die Entgasung sicherzustellen, und dass ein Einkapselungsmaterial (31), das gegenüber dem während des Zusammenfügens fließenden Material (30) dicht und gegenüber dem Eindringen von Feuchtigkeit in die Mehrschichtstruktur dicht ist, wenigstens den Teil ihrer Kante einkapselt, der zwischen der Kante der Scheibe (11) zum Abfangen eines Projektilaufpralls und wenigstens einem Teil des Panzerungseinsatzes (20) gelegen ist.

2. Mehrschichtstruktur nach Anspruch 1, **dadurch gekennzeichnet, dass** das Einkapselungsmaterial (31) gegenüber dem Rand der ersten Glasscheibe (1) zurückspringt, derart, dass letztere mit dem Rand der Haftschicht (2), welche die erste und die zweite Glasscheibe (1, 3) verbindet, und dem Rand des Panzerungseinsatzes (20) einen Dickenvorsprung bildet und dabei das Einsetzen in einen Rahmen oder einen Falz in Montageposition ermöglicht.

3. Mehrschichtstruktur nach einem der vorstehenden Ansprüche, **dadurch gekennzeichnet, dass** das Material (30), das geeignet ist, während des Zusammenfügens der Mehrschichtstruktur zu fließen und die Entgasung sicherzustellen, aus einem thermoplastischen Polymer oder Copolymer mit einer Erweichungstemperatur im Bereich zwischen 80 und 140 °C, wie thermoplastischem Polyurethan, das mit Polyvinylbutyral assoziiert ist oder nicht, Ethylen/Vinylacetat-Copolymer oder Verbundwerkstoff aus einem oder mehreren von ihnen und aus Glasfaser oder - gewebe, Aramid, Polycarbonat, Stahl oder ähnlichem, ausgewählt ist.

4. Mehrschichtstruktur nach einem der vorstehenden Ansprüche, **dadurch gekennzeichnet, dass** das Einkapselungsmaterial (31) aus einem Material ausgewählt ist, das bei den Temperaturen zum Zusammenfügen des Verbunds im Autoklaven zwischen 100 und 140 °C nicht erweicht, insbesondere einem Material mit einer Erweichungstemperatur im Bereich zwischen 145 und 190 °C, einem thermoplastischen Elastomer, Polyvinylchlorid, thermoplastischem oder wärmehärtendem Polyurethan, Polyethylenterephthalat, Neopren, Gummi, Epoxidharz, oder Verbundwerkstoff aus einem oder mehreren von ihnen und aus Glasfaser oder -gewebe, Aramid, Polycarbonat, Stahl oder ähnlichem.

5. Mehrschichtstruktur nach einem der vorstehenden Ansprüche, **dadurch gekennzeichnet, dass** wenigstens eine der ersten, der zweiten oder der dritten Glasscheibe (1, 3, 5), oder zusätzlichen Glasscheiben, verstärkt, insbesondere chemisch vorgespannt ist.

6. Mehrschichtstruktur nach einem der vorstehenden Ansprüche, **dadurch gekennzeichnet, dass** die Dicke der ersten und der zweiten Glasscheibe (1, 3), und zusätzlichen Glasscheiben, im Bereich zwischen 2 und 8 mm, diejenige der dritten Glasscheibe (5) zwischen 4 und 10 mm, diejenige der Scheibe (11) zum Abfangen eines Projektilaufpralls zwischen 2 und 4 mm, diejenige einer jeden Haftschicht (2, 4), welche zwei Glasscheiben ((1, 3); (3, 5)) verbindet, zwischen 0,3 und 1,5 mm und diejenige der Haftschicht (10), welche die dritte oder letzte Glasscheibe (5) und die Scheibe (11) zum Abfangen eines Projektilaufpralls verbindet, zwischen 1,5 und 3,5 mm liegt.

7. Mehrschichtstruktur nach einem der vorstehenden Ansprüche, **dadurch gekennzeichnet, dass** die Scheibe (11) zum Abfangen eines Projektilaufpralls aus Polycarbonat oder ähnlichem besteht.

8. Mehrschichtstruktur nach einem der vorstehenden Ansprüche, **dadurch gekennzeichnet, dass** der Panzerungseinsatz (20) aus Stahl oder ähnlichem mit einer Dicke im Bereich zwischen 1 und 4 mm besteht und in die Mehrschichtstruktur um eine Tiefe zwischen 3 und 20 mm, bezogen auf den Rand der Scheibe (11) zum Abfangen eines Projektilaufpralls, eindringt.

9. Verglasung mit hohem ballistischen Widerstand für das Bauwesen oder ein Land-, Luft- oder Wasserbeförderungsfahrzeug, umfassend eine Mehrschichtstruktur nach einem der vorstehenden Ansprüche.

## Claims

1. Laminated structure comprising, in succession: at least a first glass sheet (1); a second glass sheet (3) connected to the first via an adhesive layer (2), the edge of the second glass sheet (3) being set back from that of the first (1) on at least one side; a third glass sheet (5) connected to the second (3) via an adhesive layer (4), the edge of the second glass sheet (3) being, on at least said side, set back from that of the third (5) which is itself set back from that of the first (1); optionally one or more additional glass sheets connected to the third (5) and, where appropriate, to one another via one or more adhesive layers; a sheet (11) for dampening the impact of a projectile, is connected to the third or last glass sheet (5) via an adhesive layer (110); and an armoring insert (20) made of material of high bullet that occupies, on at least said side, at least part of the cavity bounded by the edges of the first and third glass sheets (1, 5) and the end face of the second glass sheet (3), **characterized in that**, on at least said side, the edges of the third glass sheet (5) and of said additional glass sheet or sheets are set back from that of the sheet (11) in order to dampen the impact of a projectile, **in that** the space between the armoring insert (20), the end face of the third glass sheet (5) and the edge of the sheet (11) for dampening the impact of a projectile is at least partly occupied by a material (30, 31) capable of absorbing the energy of a projectile, **in that** the material (30, 31) capable of absorbing the energy of a projectile is bonded to the armoring insert (20), to the end face of the third glass sheet (5) and to the sheet (11) for dampening the impact of a projectile, via a material (30) capable of flowing and of ensuring degassing during assembly of the laminated structure, and **in that** an encapsulation material (31), impervious to the material (30) flowing during the assembly and impermeable to the penetration of moisture into the laminated structure, encapsulates at least that portion of the end face of said laminated structure which lies between the end face of the sheet (11) for dampening the impact of a projectile and at least part of the armoring insert (20).

2. Laminated structure according to Claim 1, **characterized in that** the encapsulation material (31) is set back from the edge of the first glass sheet (1) in such a way that this encapsulation material forms, with the edge of the adhesive layer (2) connecting the first and second glass sheets (1, 3) and the edge of the armoring insert (20), a projection with a thickness allowing it to be inserted into a frame or rebate in the mounting position.

3. Laminated structure according to either of the preceding claims, **characterized in that** the material (30) capable of flowing and ensuring degassing during the assmbly of the laminated structure is chosen from a thermoplastic polymer or copolymer with a softening temperature between 80 and 140°C. such as a thermoplastic polyurethane, possibly combined with polyvinyl butyral, ethylene/vinyl acetate copolymer or a composite made up from one or more of them and from fiber or fabric made of glass, aramid, polycarbonate, steel or the like.

4. Laminated structure according to one of the preceding claims, **characterized in that** the encapsulation material (31) is chosen from a material that does not soften at the temperatures at which the laminate is assembled in the autoclave, namely between 100 and 140°C, especially a material having a softening temperature between 145 and 190°C, a thermoplastic elastomer, polyvinyl chloride, a thermoplastic or thermosetting polyuréthane, polyethylene terephtalate, neoprene, rubber, epoxy resin, or a composite made up from one or more of them and of fiber or fabric made of glass, aramid, polycarbonate, steel or the like.

5. Laminated structure according to one of the preceding claims, **characterized in that** at least one of the first, second and third glass sheets (1. 3, 5), or additional glass sheets, is strengthened, especially chemically toughened.

6. Laminated structure according to one of the preceding claims, **characterized in that** the thickness of the first and second glass sheets (1, 3) and additional glass sheets is between 2 and 8 mm, that of the third glass sheet (5) between 4 and 10 mm, that of the sheet (11) for dampening the impact or a projectile between 2 and 4 mm, that of each adhesive layer (2, 4) connecting two glass sheets ((1, 3) : (3, 5), between 0.3 and 1.5 mm and that of the adhesive layer (10) connecting the third or last glass sheet (5) to the sheet (11) for dampening the impact of a projectile between 1.5 and 3.5 mm.

7. Laminated structure according to one of the preceding claims, **characterized in that** the sheet (11) for dampening the impact of a projectile is made of polycarbonate or the like.

8. Laminated structure according to one of the preceding claims, **characterized in that** the armoring insert (20) is made of steel or the like, with a thickness of between 1 and 4 mm, and penetrates into the laminated structure by a depth of between 3 and 20 mm from the edge of the sheet (11) for dampening the impact of a projectile.

9. Glazing with high bullet resistance for buildings or land, air or aquatic transport vehicles, comprising a laminated structure according to one of the preceding claims.
